# EUROPEAN PATENT SPECIFICATION

(11) **EP 3 556 719 B1**
(45) Date of publication and mention of the grant of the patent: **29.03.2023**
(21) Application number: 17885036.8
(22) Date of filing: 20.12.2017
(51) Int. Cl.: B66F 9/075, E05D 3/06, E05D 5/06, B60J 5/04

(54) **FORKLIFT SIDE DOOR**
GABELSTAPLERSEITENTÜR
PORTE LATÉRALE DE CHARIOT ÉLÉVATEUR À FOURCHE

(30) Priority: 20.12.2016 KR 20160174575
(43) Date of publication of application: 23.10.2019
(73) Proprietor: Doosan Industrial Vehicle Co., Ltd., Incheon 22503 (KR)
(72) Inventor: LEE, Jong Hyun, Seoul 04170 (KR)
(74) Representative: Isarpatent
(86) International application number: PCT/KR2017/015068
(87) International publication number: WO 2018/117615

(56) References cited:
- JP-A- H06 278 467
- JP-A- H07 197 726
- JP-A- 2002 160 895
- KR-A- 20150 029 894
- US-A- 4 564 975
- US-B2- 9 187 940

## Description

### [TECHNICAL FIELD]

Embodiments of the present invention relate to a door for a forklift provided at a side portion of a vehicle body of the forklift, and more particularly, to a side door for a forklift capable of being open 90 degrees and 180 degrees, as necessary, to facilitate quick and easy replacement of a battery.

### [DISCUSSION OF RELATED ART]

A forklift is an industrial vehicle used to lift and transport heavy cargos, and is widely used for, for example, transporting cargos at close range in a construction site, or loading cargos in an indoor work site.

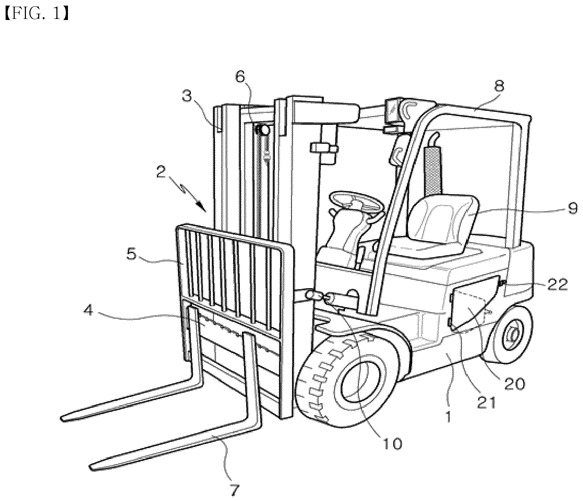

As illustrated in FIG. 1, a general forklift includes a vehicle body 1 equipped with an engine, and a mast assembly 2 is provided in front of the vehicle body 1.

The mast assembly 2 includes a mast rail 3 disposed along a vertical direction and a carriage 4 capable of moving up and down along the mast rail 3, and the mast assembly 2 is provided to be slightly tilted toward a driver's seat by a tilt cylinder 10.

The carriage 4 moves up and down by a lift chain 6, and a pair of forks 7 for lifting a cargo are mounted in front of the carriage 4.

The pair of forks 7 are provided to be adjustable in width from side to side, and a back rest 5 for supporting the cargo is provided above the pair of forks 7.

A driver's seat 9 is provided above the vehicle body 1, and an overhead guard 8 is provided above the driver's seat 9 to protect a driver.

A counterweight 11 is provided behind the vehicle body 1.

In addition, a side door 20 is provided for maintenance of various components, such as an engine, a battery, and an electric device.

The side door 20 has a structure in which a hinge portion 21 is provided at one side surface of the side door 20 to be pivotally opened in one direction, and a locking lever 22 is provided at another side surface thereof for locking the side door 20.

In the case of maintenance for components inside the vehicle body 1, the side door 20 in the aforementioned door structure is laterally opened, and necessary work is performed.

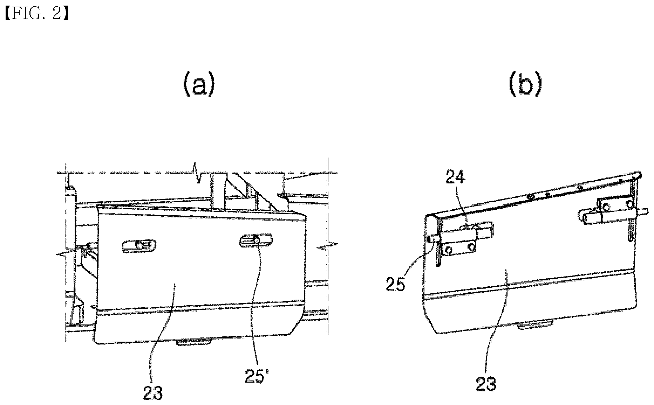

In addition, the side door may be formed in a detachable structure, as illustrated in FIG. 2.

That is, a door securing pin 25 may be provided, at inner opposite sides of a door panel 23, to be slidable in a left and right direction, and a hole 24 for exposing a portion of the door securing pin 25 may be defined so that sliding of the door securing pin 25 is possible from the outside of the door panel 21.

In such a case, a knob 25' is formed at the door securing pin 25 to protrude outwardly of the door panel 21 through the hole 24.

With such a door structure, the door securing pin 25 may slide in the left and right direction. Accordingly, the door panel 21 may be mounted at the vehicle body by coupling an end portion of the door securing pin 25 to the vehicle body in an inserting manner, and the door panel 21 may be separated from the vehicle body by sliding the door securing pin 25 inwards to be separated from the vehicle body.

However, the side door of such a detachable structure requires complete separation of the door panel from the vehicle body for maintenance of components provided therein, and further requires works to mount the door panel on the vehicle body after maintenance, thus causing inconvenience.

Meanwhile, a battery is provided at electric forklifts so as to provide power to a gearing unit, and the battery should be replaced when the forklift is operated for more than a certain period of time.

Examples of a method of replacing the battery may include a method in which a battery is taken out upwards using a crane and a new battery is mounted from above.

However, the method of replacing the battery using a crane has a disadvantage in that it takes a lot of time and cost to replace the battery because a crane which is a heavy equipment should be used.

Accordingly, recently, a method of pulling out or mounting the battery from a side surface of the forklift using another forklift or a pallet truck has been employed.

This method is advantageous in that the battery can be replaced conveniently and quickly as compared with the method using the crane.

However, the above-described side draw-out method of the battery requires the side door to be completely open.

Accordingly, in a conventional detachable side door structure, there is a disadvantage in that the side door should be priorly separated from the vehicle body to take out the battery.

In addition, the rotary-type door structure described above has a disadvantage in that it is difficult to open the door 180 degrees, and interference may occur due to the door panel in the process of taking out the battery.

Meanwhile, the following patent literature was found as a result of investigation of the prior art relating to the present invention.

Patent Document 1 discloses a sliding door structure of a forklift, the forklift including: a mast assembly provided in front of a vehicle body of the forklift; a carriage which is movable up and down along a mast rail which is provided in a vertical direction at the mast assembly, a pair of forks parallelly provided in front of the carriage to be adjustable in width from left to right, and a door provided at a side surface of the vehicle body of the forklift, the door including: a door frame assembled to the vehicle body of the forklift, a pair of guide rails provided inside the door frame, a moving pin moving on the pair of guide rails, and a pair of connecting members connecting the moving pin and the door, wherein when a lower portion of the door is lifted, the moving pin slides on the guide rail to the inside of the vehicle body, and left and right spaces are kept in a completely open state when the door is open, thereby improving convenience of maintenance works, and once the door has been opened, the door maintains a secured state to secure the safety during maintenance works.

Patent Document 2 provides a first hinge body and a second hinge body that are connected together through a first shaft in order to reduce working coat of hinge bodies and eliminate poor operation of a lock tool by improving construction and arrangement of a lock tool and stoppers, in a door hinge in which the opening motion of a door can be regulated on the half opened position and two hinge shafts are provided.

### [Prior Art Document]

### [Patent Literature]

(Patent Document 1) KR 10-2015-0029894 A
(Patent Document 2) JP H07 197726 A

### [SUMMARY OF THE INVENTION]

### [TECHNICAL PROBLEM]

Embodiments of the present invention may be directed to allowing a door to be open 90 degrees or 180 degrees by using a double hinge.

Further, embodiments of the present invention may be directed to allowing a door to be completely open 180 degrees when components such as a battery is replaced, thereby making it possible to quickly and simply taking out or mounting parts from a side surface of a vehicle body.

### [TECHNICAL SOLUTION TO THE PROBLEM]

According to the present invention, a side door for a forklift is provided, as defined by claim 1. The side door provided at a side portion of a vehicle body of the forklift includes: a door panel; a hinge securing bracket of which one side is secured to the vehicle body; a first hinge shaft provided at another side of the hinge securing bracket; a first hinge block of which one side is supported by the first hinge shaft, and which is relatively rotatably coupled to the hinge securing bracket; a second hinge block of which one side is disposed adjacent to another side of the first hinge block, and of which another side is supported by the door panel; a second hinge shaft connecting another side of the first hinge block and one side of the second hinge block such that the second hinge block is relatively rotatably coupled to the first hinge block; and a locking member capable of selectively locking the second hinge block to the first hinge block such that the second hinge block and the first hinge block are rotatable integrally. The second hinge shaft is provided to pass vertically through a protruding portion of the first hinge block that protrudes from the first hinge block toward the second hinge block, and to pass through protruding portions of the second hinge block that are spaced apart from each other to cover an upper portion and a lower portion of the protruding portion of the first hinge block, respectively, on one side of the second hinge block.

When the locking member locks the second hinge block and the first hinge block to be connected to each other, the door panel may be rotatable about the first hinge shaft, and when the locking member releases connection between the second hinge block and the first hinge block, the door panel may be rotatable about the first hinge shaft and rotatable about the second hinge shaft.

The first hinge shaft may pass vertically through the first hinge block, and may be fitted to the hinge securing bracket in an insertion manner from the outside of the first hinge block.

According to the present invention, a side door for a forklift is provided, as defined by claim 4. The side door provided at a side portion of a vehicle body of the forklift includes: a door panel; a hinge securing bracket of which one side is secured to the vehicle body; a first hinge shaft provided at another side of the hinge securing bracket; a first hinge block of which one side is supported by the first hinge shaft, and which is relatively rotatably coupled to the hinge securing bracket; a second hinge block of which one side is disposed adjacent to another side of the first hinge block, and of which another side is supported by the door panel; a second hinge shaft connecting another side of the first hinge block and one side of the second hinge block such that the second hinge block is relatively rotatably coupled to the first hinge block; and a locking member capable of selectively locking the second hinge block to the first hinge block such that the second hinge block and the first hinge block are rotatable integrally. The locking member includes: a hinge securing pin provided to pass through the second hinge block, and to secure the second hinge block to the first hinge block by allowing an inner end portion of the hinge securing pin to be inserted to a hole defined at the first hinge block; a safety ring provided at an outer end portion of the hinge securing pin which protrudes outwardly of the second hinge block; and a return spring provided outside the hinge securing pin to allow the inner end portion of the hinge securing pin to be inserted into the hole of the first hinge block.

The door panel may be formed, divided into a lower panel at which the second hinge block is provided and an upper panel connected to an upper portion of the lower panel without a hinge portion.

The side door for a forklift may further include: a door securing pin provided on a side of the door panel that is opposite in a widthwise direction from a side of the door panel on which the second hinge block is provided, the door securing pin capable of selectively securing the door panel to the vehicle body.

### [EFFECTS OF THE INVENTION]

A side door for a forklift according to an embodiment may rotate a door panel 90 degrees or 180 degrees by using a double hinge structure in which two hinges, each rotatable 90 degrees, are integrated.

Accordingly, the door panel is open only up to 90 degrees to perform general operations, and when a battery or other parts are replaced, the door panel is open 180 degrees so that the parts may be taken out or mounted quickly without interference with the door panel.

In addition, a first hinge block and a second hinge block are integrated by using a locking member, and thus the door panel may be open only up to 90 degrees to perform general operations, and when securing by the locking member is released, the door panel may be open up to 180 degrees.

In addition, since a return spring is provided at a hinge securing pin, the hinge securing pin is substantially prevented from being separated, and due to an elastic force of the return spring, the hinge securing pin maintains a secured state of the first hinge block and the second hinge block.

In addition, since the door panel may be formed, divided into a lower panel provided with a hinge portion and an upper panel having no hinge portion, the door panel can be rotated even with a small force.

### [BRIEF DESCRIPTION OF THE DRAWINGS]

FIG. 1 is a reference view illustrating a structure of a general forklift.
FIG. 2 is a configuration diagram illustrating a conventional detachable side door.
FIG. 3 is a configuration diagram illustrating a side door for a forklift according to an embodiment.
FIG. 4 is a schematic view illustrating a hinge portion which is an essential feature of the present invention.
FIG. 5 is a reference view illustrating a side door for a forklift according to an embodiment that is open 90 degrees.
FIG. 6 is a reference view illustrating a side door for a forklift according to an embodiment that is open 180 degrees.

### [DETAILED DESCRIPTION]

Hereinafter, desired embodiments of a side door for a forklift of the present invention will be described with reference to accompanying drawings.

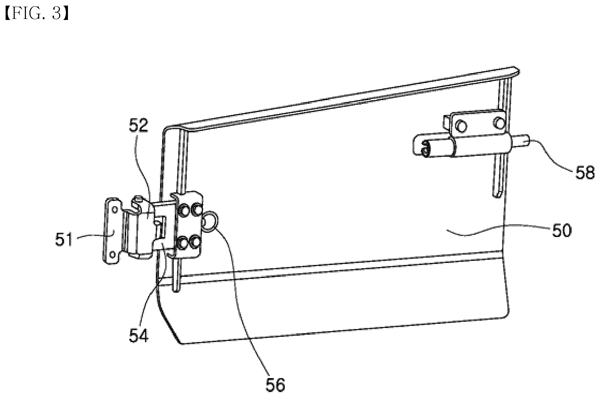

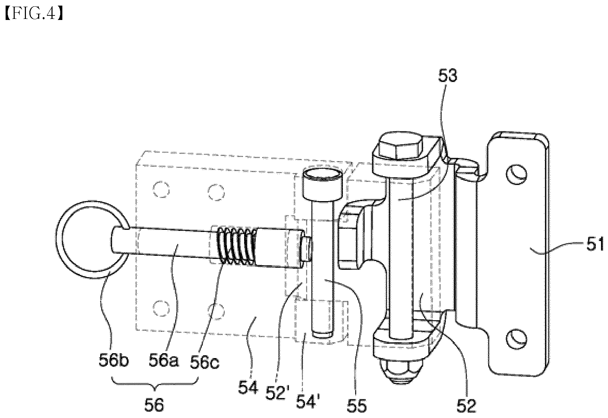

As illustrated in FIGS. 3 to 6, a side door for a forklift according to an embodiment, the side door provided at a side portion of a vehicle body of the forklift, includes a door panel 50 at of which one side a door securing pin 58 is slidably provided; a hinge securing bracket 51 secured to the vehicle body; a first hinge block 52 coupled to the hinge securing bracket 51 to be relatively rotatable by disposing a first hinge shaft 53 between the first hinge block 52 and the hinge securing bracket 51; a second hinge block 54 coupled to the first hinge block 52 to be relatively rotatable by disposing a second hinge shaft 54 between the second hinge block 54 and the first hinge block 52, the second hinge block 54 secured to the door panel 50; and a locking member 56 for locking and securing the second hinge block 54 to the first hinge block 52 so that the second hinge block 54 is rotatable integrally with the first hinge block 52. In such an embodiment, it is desirable that the first hinge block 52 is rotatable 90 degrees with respect to the hinge securing bracket 51, and the second hinge block 54 is rotatable 90 degrees with respect to the first hinge block 52.

The first hinge shaft 53 passes vertically through the first hinge block 52, and is fitted to the hinge securing bracket 51 in an insertion manner from the outside of the first hinge block 52. In addition, the second hinge shaft 55 is provided so that it passes vertically through a protruding portion 52' of the first hinge block 52, and also passes through protruding portions 54' of the second hinge block 54, each located at an upper portion and a lower portion of the protruding portion 52' of the first hinge block 52. In addition, the locking member 56 includes a hinge securing pin 56a that is provided to pass through the second hinge block 54, and secures the second hinge block 54 to the first hinge block 52 by allowing an inner end portion of the hinge securing pin 56a to be inserted to a hole defined at the first hinge block 52; a safety ring 56b that is provided at an outer end portion of the hinge securing pin 56a which protrudes outwardly of the second hinge block 54; and a return spring 56c that is provided outside the hinge securing pin 56a to allow the inner end portion of the hinge securing pin 56a to be inserted into the hole of the first hinge block 52.

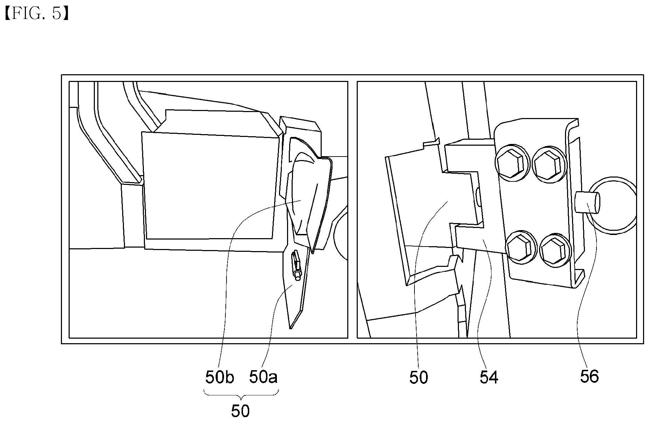

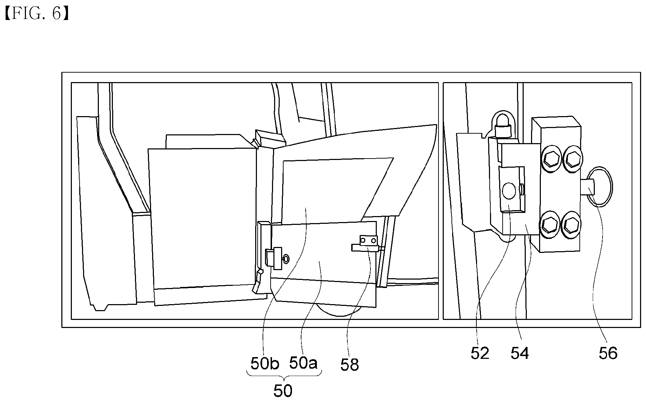

As illustrated in FIGS. 5 and 6, the door panel 50 may be formed, divided into a lower panel 50a at which the second hinge block 54 is provided and an upper panel 50b which is connected to an upper portion of the lower panel 50a without a hinge portion.

The side door for a forklift according to an embodiment having the above-described structure is open 90 degrees or 180 degrees, as necessary, so that a necessary operation can be performed.

When the door panel 50 is opened for maintenance of parts inside the side door, the door panel 50 is open only up to 90 degrees.

That is, after the door securing pin 58 provided at one side of the door panel 50 is separated from the vehicle body, the door panel 50 is rotated.

In such a case, since the second hinge block 54 secured to the door panel 50 is secured to the first hinge block 52 by the hinge securing pin 56a of the locking member 56, the door panel 50 is open only up to 90 degrees.

That is, due to the first hinge block 52, which is rotatable only up to 90 degrees with respect to the hinge securing bracket 51 secured to the vehicle body, the door panel 50 may be open only up to 90 degrees.

Accordingly, the door panel 50 may be open only up to 90 degrees in a rotated state, as illustrated in FIG. 5, and in such a state, general operations such as maintenance of parts are performed.

On the other hand, when it is necessary to completely open the side door as in the case of battery replacement, in a state that the door panel 50 is rotated 90 degrees through the same process as described above, securing of the first hinge block 52 and the second hinge block 54 by the locking member 56 is released.

Thereafter, when the door panel 50 is further rotated 90 degrees, the door panel 50 is completely open 180 degrees.

In a case where the hinge securing pin 56a is pulled by using the safety ring 56b of the locking member 56, the inner end portion of the hinge securing pin 56a is separated from the hole of the first hinge block 52, thus releasing securing, and the second hinge block 54 may be rotated with respect to the first hinge block 52.

Since the second hinge block 54 may be further rotated 90 degrees with respect to the first hinge block 52 that has been rotated only by 90 degrees with respect to the hinge securing bracket 51, the door panel 50 may be open up to 180 degrees in a rotated state with respect to the vehicle body.

Accordingly, the battery or the like may be replaced without interference of the door panel 50.

While the present invention has been particularly shown and described with reference to exemplary embodiments thereof, although specific terms have been employed, they have been used in a generic sense only to facilitate the description of the subject matter of the specification and to aid the understanding of the invention, and it is not intended to limit the scope of the specification as defined by the claims.

### [Industrial applicability]

According to an embodiment, a door is provided at a side portion of a vehicle body of a forklift, and an operator may select, as necessary, the door to be open 90 degrees or 180 degrees, parallel to one surface of the vehicle body, with respect to the vehicle body such that a battery provided at a side portion of the vehicle body of the forklift can be quickly and conveniently replaced.

## Claims

1. Forklift side door (20), the side door (20) provided at a side portion of a vehicle body (1) of the forklift, the side door (20) comprising:
a door panel (50);
a hinge securing bracket (51) of which one side is secured to the vehicle body (1);
a first hinge shaft (53) provided at another side of the hinge securing bracket (51);
a first hinge block (52) of which one side is supported by the first hinge shaft (53), and which is relatively rotatably coupled to the hinge securing bracket (51);
a second hinge block (54) of which one side is disposed adjacent to another side of the first hinge block (52), and of which another side is supported by the door panel (50);
a second hinge shaft (55) connecting another side of the first hinge block (52) and one side of the second hinge block (54) such that the second hinge block (54) is relatively rotatably coupled to the first hinge block (52); and
a locking member (56) capable of selectively locking the second hinge block (54) to the first hinge block (52) such that the second hinge block (54) and the first hinge block (52) are rotatable integrally,
**characterized in that**:
wherein the second hinge shaft (55) is provided to pass vertically through a protruding portion (52') of the first hinge block (52) that protrudes from the first hinge block (52) toward the second hinge block (54), and to pass through protruding portions (54') of the second hinge block (54) that are spaced apart from each other to cover an upper portion and a lower portion of the protruding portion (52') of the first hinge block (52), respectively, on one side of the second hinge block (54).

2. The forklift side door (20) of claim 1, wherein when the locking member (56) locks the second hinge block (54) and the first hinge block (52) to be connected to each other, the door panel (50) is rotatable about the first hinge shaft (53), and
when the locking member (56) releases connection between the second hinge block (54) and the first hinge block (52), the door panel (50) is rotatable about the first hinge shaft (53) and rotatable about the second hinge shaft (55).

3. The forklift side door (20) of claim 1, wherein the first hinge shaft (53) passes vertically through the first hinge block (52), and is fitted to the hinge securing bracket (51) in an insertion manner from the outside of the first hinge block (52).

4. Forklift side door (20), the side door (20) provided at a side portion of a vehicle body (1) of the forklift, the side door (20) comprising:
a door panel (50);
a hinge securing bracket (51) of which one side is secured to the vehicle body (1);
a first hinge shaft (53) provided at another side of the hinge securing bracket (51);
a first hinge block (52) of which one side is supported by the first hinge shaft (53), and which is relatively rotatably coupled to the hinge securing bracket (51);
a second hinge block (54) of which one side is disposed adjacent to another side of the first hinge block (52), and of which another side is supported by the door panel (50);
a second hinge shaft (55) connecting another side of the first hinge block (52) and one side of the second hinge block (54) such that the second hinge block (54) is relatively rotatably coupled to the first hinge block (52); and
a locking member (56) capable of selectively locking the second hinge block (54) to the first hinge block (52) such that the second hinge block (54) and the first hinge block (52) are rotatable integrally,
**characterized in that**:
wherein the locking member (56) comprises: a hinge securing pin (56a) provided to pass through the second hinge block (54), and to secure the second hinge block (54) to the first hinge block (52) by allowing an inner end portion of the hinge securing pin (56a) to be inserted to a hole defined at the first hinge block (52); a safety ring (56b) provided at an outer end portion of the hinge securing pin (56a) which protrudes outwardly of the second hinge block (54); and a return spring (56c) provided outside the hinge securing pin (56a) to allow the inner end portion of the hinge securing pin (56a) to be inserted into the hole of the first hinge block (56).

5. The forklift side door (20) of one of claims 1 to 4, wherein the door panel (50) is formed, divided into a lower panel (50a) at which the second hinge block (54) is provided and an upper panel (50b) connected to an upper portion of the lower panel (50a) without a hinge portion.

6. The side door (20) for a forklift of claim 1, further comprising a door securing pin (25) provided on a side of the door panel (50) that is opposite in a widthwise direction from a side of the door panel (50) on which the second hinge block (54) is provided, the door securing pin (25) capable of selectively securing the door panel (50) to the vehicle body (1).

## Patentansprüche

1. Gabelstapler-Seitentür (20), wobei die Seitentür (20) an einem Seitenabschnitt einer Fahrzeugkarosserie (1) des Gabelstaplers angeordnet ist, wobei die Seitentür (20) umfasst:
ein Türpaneel (50);
eine Scharnierbefestigungshalterung (51), die auf einer Seite an der Fahrzeugkarosserie (1) befestigt ist;
eine erste Scharnierwelle (53), die auf einer anderen Seite der Scharnierbefestigungshalterung (51) angeordnet ist;
einen ersten Scharnierblock (52), der auf einer Seite durch die erste Scharnierwelle (53) gestützt wird und der mit der Scharnierbefestigungshalterung (51) relativ drehbar gekoppelt ist;
einen zweiten Scharnierblock (54), der auf einer Seite neben einer anderen Seite des ersten Scharnierblocks (52) angeordnet ist und der auf einer anderen Seite durch das Türpaneel (50) gestützt wird;
eine zweite Scharnierwelle (55), die eine andere Seite des ersten Scharnierblocks (52) und eine Seite des zweiten Scharnierblocks (54) so verbindet, dass der zweite Scharnierblock (54) mit dem ersten Scharnierblock (52) relativ drehbar gekoppelt ist; und
ein Verriegelungselement (56), das in der Lage ist, den zweiten Scharnierblock (54) selektiv an dem ersten Scharnierblock (52) so zu verriegeln, dass der zweite Scharnierblock (54) und der erste Scharnierblock (52) integral drehbar sind,
**dadurch gekennzeichnet, dass**:
die zweite Scharnierwelle (55) so angeordnet ist, dass sie vertikal durch einen vorstehenden Abschnitt (52') des ersten Scharnierblocks (52), der von dem ersten Scharnierblock (52) in Richtung des zweiten Scharnierblocks (54) vorsteht, hindurch verläuft, sowie durch vorstehende Abschnitte (54') des zweiten Scharnierblocks (54) hindurch verläuft, die so voneinander beabstandet sind, dass sie einen oberen Abschnitt bzw. einen unteren Abschnitt des vorstehenden Abschnitts (52') des ersten Scharnierblocks (52) auf einer Seite des zweiten Scharnierblocks (54) bedecken.

2. Gabelstapler-Seitentür (20) nach Anspruch 1, wobei, wenn das Verriegelungselement (56) den zweiten Scharnierblock (54) und den ersten Scharnierblock (52) so verriegelt, dass sie miteinander verbunden sind, das Türpaneel (50) um die erste Scharnierwelle (53) drehbar ist, und,
wenn das Verriegelungselement (56) die Verbindung zwischen dem zweiten Scharnierblock (54) und dem ersten Scharnierblock (52) löst, das Türpaneel (50) um die erste Scharnierwelle (53) drehbar ist und um die zweite Scharnierwelle (55) drehbar ist.

3. Gabelstapler-Seitentür (20) nach Anspruch 1, wobei die erste Scharnierwelle (53) vertikal durch den ersten Scharnierblock (52) hindurch verläuft und von der Außenseite des ersten Scharnierblocks (52) her in die Scharnierbefestigungshalterung (51) hineingeschoben wird.

4. Gabelstapler-Seitentür (20), wobei die Seitentür (20) an einem Seitenabschnitt einer Fahrzeugkarosserie (1) des Gabelstaplers angeordnet ist, wobei die Seitentür (20) umfasst:
ein Türpaneel (50);
eine Scharnierbefestigungshalterung (51), die auf einer Seite an der Fahrzeugkarosserie (1) befestigt ist;
eine erste Scharnierwelle (53), die auf einer anderen Seite der Scharnierbefestigungshalterung (51) angeordnet ist;
einen ersten Scharnierblock (52), der auf einer Seite durch die erste Scharnierwelle (53) gestützt wird und der mit der Scharnierbefestigungshalterung (51) relativ drehbar gekoppelt ist;
einen zweiten Scharnierblock (54), der auf einer Seite neben einer anderen Seite des ersten Scharnierblocks (52) angeordnet ist und der auf einer anderen Seite durch das Türpaneel (50) gestützt wird;
eine zweite Scharnierwelle (55), die eine andere Seite des ersten Scharnierblocks (52) und eine Seite des zweiten Scharnierblocks (54) so verbindet, dass der zweite Scharnierblock (54) mit dem ersten Scharnierblock (52) relativ drehbar gekoppelt ist; und
ein Verriegelungselement (56), das in der Lage ist, den zweiten Scharnierblock (54) selektiv an dem ersten Scharnierblock (52) so zu verriegeln, dass der zweite Scharnierblock (54) und der erste Scharnierblock (52) integral drehbar sind,
**dadurch gekennzeichnet, dass**:
das Verriegelungselement (56) umfasst:
einen Scharnierbefestigungsstift (56a), der so angeordnet ist, dass er durch den zweiten Scharnierblock (54) hindurch verläuft und den zweiten Scharnierblock (54) an dem ersten Scharnierblock (52) befestigt, indem ein innerer Endabschnitt des Scharnierbefestigungsstifts (56a) in ein an dem ersten Scharnierblock (52) definiertes Loch hineingeschoben werden kann;
einen Sicherheitsring (56b), der an einem äußeren Endabschnitt des Scharnierbefestigungsstifts (56a) angeordnet ist, der aus dem zweiten Scharnierblock (54) herausragt; und
eine Rückholfeder (56c), die außerhalb des Scharnierbefestigungsstifts (56a) angeordnet ist, damit der innere Endabschnitt des Scharnierbefestigungsstifts (56a) in das Loch des ersten Scharnierblocks (56) hineingeschoben werden kann.

5. Gabelstapler-Seitentür (20) nach einem der Ansprüche 1 bis 4, wobei das Türpaneel (50) so gebildet ist, dass es in ein unteres Paneel (50a), an dem der zweite Scharnierblock (54) angeordnet ist, und ein oberes Paneel (50b), das mit einem oberen Abschnitt des unteren Paneels (50a) ohne einen Scharnierabschnitt verbunden ist, unterteilt ist.

6. Gabelstapler-Seitentür (20) nach Anspruch 1, des Weiteren umfassend einen Türsicherungsstift (25), der an einer Seite des Türpaneels (50) angeordnet ist, die in einer Breitenrichtung einer Seite des Türpaneels (50) gegenüberliegt, auf welcher der zweite Scharnierblock (54) angeordnet ist, wobei der Türsicherungsstift (25) in der Lage ist, das Türpaneel (50) selektiv an der Fahrzeugkarosserie (1) zu sichern.

## Revendications

1. Porte latérale de chariot élévateur à fourche (20), la porte latérale (20) étant prévue au niveau d'une partie latérale d'une carrosserie de véhicule (1) du chariot élévateur à fourche, la porte latérale (20) comprenant :
un panneau de porte (50) ;
un support de fixation de charnière (51) dont un côté est fixé à la carrosserie de véhicule (1) ;
un premier arbre de charnière (53) prévu sur un autre côté du support de fixation de charnière (51) ;
un premier bloc de charnière (52) dont un côté est supporté par le premier arbre de charnière (53), et qui est couplé de manière relativement rotative au support de fixation de charnière (51) ;
un second bloc de charnière (54) dont un côté est disposé de manière adjacente à un autre côté du premier bloc de charnière (52), et dont un autre côté est supporté par le panneau de porte (50) ;
un second arbre de charnière (55) reliant un autre côté du premier bloc de charnière (52) et un côté du second bloc de charnière (54) de sorte que le second bloc de charnière (54) est couplé de manière relativement rotative au premier bloc de charnière (52) ; et
un élément de verrouillage (56) capable de verrouiller sélectivement le second bloc de charnière (54) sur le premier bloc de charnière (52) de sorte que le second bloc de charnière (54) et le premier bloc de charnière (52) peuvent tourner d'un seul tenant,
**caractérisée en ce que** :
dans laquelle le second arbre de charnière (55) est prévu pour passer verticalement à travers une partie saillante (52') du premier bloc de charnière (52) qui fait saillie à partir du premier bloc de charnière (52) vers le second bloc de charnière (54), et pour passer à travers des parties saillantes (54') du second bloc de charnière (54) qui sont espacées l'une de l'autre pour couvrir une partie supérieure et une partie inférieure de la partie saillante (52') du premier bloc de charnière (52), respectivement, sur un côté du second bloc de charnière (54).

2. Porte latérale de chariot élévateur à fourche (20) selon la revendication 1, dans laquelle lorsque l'élément de verrouillage (56) verrouille le deuxième bloc de charnière (54) et le premier bloc de charnière (52) pour qu'ils soient reliés l'un à l'autre, le panneau de porte (50) peut tourner autour du premier arbre de charnière (53), et
lorsque l'élément de verrouillage (56) libère la liaison entre le second bloc de charnière (54) et le premier bloc de charnière (52), le panneau de porte (50) peut tourner autour du premier arbre de charnière (53) et peut tourner autour du second arbre de charnière (55).

3. Porte latérale de chariot élévateur à fourche (20) selon la revendication 1, dans laquelle le premier arbre de charnière (53) passe verticalement à travers le premier bloc de charnière (52), et est monté sur le support de fixation de charnière (51) de manière à être inséré depuis l'extérieur du premier bloc de charnière (52).

4. Porte latérale de chariot élévateur à fourche (20), la porte latérale (20) étant prévue au niveau d'une partie latérale d'une carrosserie de véhicule (1) du chariot élévateur à fourche, la porte latérale (20) comprenant :
un panneau de porte (50) ;
un support de fixation de charnière (51) dont un côté est fixé à la carrosserie de véhicule (1) ;
un premier arbre de charnière (53) prévu sur un autre côté du support de fixation de charnière (51) ;
un premier bloc de charnière (52) dont un côté est supporté par le premier arbre de charnière (53), et qui est couplé de manière relativement rotative au support de fixation de charnière (51) ;
un second bloc de charnière (54) dont un côté est disposé de manière adjacente à un autre côté du premier bloc de charnière (52), et dont un autre côté est supporté par le panneau de porte (50) ;
un second arbre de charnière (55) reliant un autre côté du premier bloc de charnière (52) et un côté du second bloc de charnière (54) de sorte que le second bloc de charnière (54) est couplé de manière relativement rotative au premier bloc de charnière (52) ; et
un élément de verrouillage (56) capable de verrouiller sélectivement le second bloc de charnière (54) sur le premier bloc de charnière (52) de sorte que le second bloc de charnière (54) et le premier bloc de charnière (52) peuvent tourner d'un seul tenant,
**caractérisée en ce que** :
dans laquelle l'élément de verrouillage (56) comprend : une broche de fixation de charnière (56a) prévue pour passer à travers le second bloc de charnière (54), et pour attacher le second bloc de charnière (54) au premier bloc de charnière (52) en permettant à une partie d'extrémité intérieure de la broche de fixation de charnière (56a) d'être insérée dans un trou défini au niveau du premier bloc de charnière (52) ; un anneau de sécurité (56b) prévu au niveau d'une partie d'extrémité extérieure de la broche de fixation de charnière (56a) qui fait saillie vers l'extérieur du second bloc de charnière (54) ; et un ressort de rappel (56c) prévu à l'extérieur de la broche de fixation de charnière (56a) pour permettre à la partie d'extrémité intérieure de la broche de fixation de charnière (56a) d'être insérée dans le trou du premier bloc de charnière (56) .

5. Porte latérale de chariot élévateur à fourche (20) selon l'une des revendications 1 à 4, dans laquelle le panneau de porte (50) est formé, divisé en un panneau inférieur (50a) au niveau duquel le second bloc de charnière (54) est prévu et un panneau supérieur (50b) relié à une partie supérieure du panneau inférieur (50a) sans partie de charnière.

6. Porte latérale (20) pour un chariot élévateur à fourche selon la revendication 1, comprenant en outre une broche de fixation de porte (25) prévue sur un côté du panneau de porte (50) qui est opposé dans le sens de la largeur à un côté du panneau de porte (50) sur lequel le second bloc de charnière (54) est prévu, la broche de fixation de porte (25) pouvant fixer sélectivement le panneau de porte (50) à la carrosserie de véhicule (1).
